# EUROPÄISCHE PATENTSCHRIFT

(11) **EP 2 883 693 B1**
(45) Veröffentlichungstag und Bekanntmachung des Hinweises auf die Patenterteilung: **05.12.2018**
(21) Anmeldenummer: 13196870.3
(22) Anmeldetag: 12.12.2013
(51) Int. Cl.: B32B 17/10, G02B 27/01

(54) **Verfahren zur Herstellung einer thermoplastischen Kombinationsfolie für eine Verbundglas-Scheibe**
Method for the preparation of a thermoplastic combination film for a laminated glass pane
Procédé de fabrication d'une feuille thermoplastique composite pour une vitre en verre feuilleté

(43) Veröffentlichungstag der Anmeldung: 17.06.2015
(73) Patentinhaber: Saint-Gobain Glass France, 92400 Courbevoie (FR)
(72) Erfinder: ARNDT, Martin, 52066 Aachen (DE); GOSSEN, Stefan, 52072 Aachen (DE)
(74) Vertreter: Lendvai, Tomas

(56) Entgegenhaltungen:
- EP-A1- 1 464 632
- WO-A1-94/00787
- WO-A1-2007/122427
- DE-A1- 4 227 582
- DE-A1-102009 004 732
- JP-A- 2005 001 948
- JP-A- 2006 327 381
- JP-A- 2009 035 444
- US-A1- 2002 094 407
- US-A1- 2007 148 472

## Beschreibung

Die Erfindung betrifft eine thermoplastische Kombinationsfolie für eine Verbundglas-Scheibe sowie ein Verfahren zu deren Herstellung.

### Hintergrund der Erfindung

Verbundglas-Scheiben werden heute an vielen Orten, insbesondere im Fahrzeugbau, verwendet. Dabei ist der Begriff Fahrzeug weit gefasst und betrifft unter anderem Straßenfahrzeuge, Flugzeuge, Schiffe, landwirtschaftliche Maschinen oder auch Arbeitsgeräte.

Auch in anderen Bereichen werden Verbundglas-Scheiben verwendet. Hierzu zählen beispielsweise Gebäude-Verglasungen als auch Informationsdisplays, z.B. in Museen oder als Werbedisplays.

Dabei weist eine Verbundglas-Scheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0.76 mm, auf.

Häufig wird die Verbundglas-Scheibe auch als Head-Up-Display (HUD) zur Anzeige von Informationen verwendet. Dabei wird mittels einer Projektionseinrichtung ein Bild auf die Verbundglas-Scheibe projiziert, um dem Betrachter eine Information ins Sichtfeld einzublenden. Im Fahrzeugbereich wird die Projektionseinrichtung z.B. auf dem Armaturenbrett angeordnet, sodass das projizierte Bild auf der nächstliegenden Glasfläche der zum Betrachter geneigten Verbundglas-Scheibe in Richtung des Betrachters reflektiert wird.

Dabei tritt ein Teil des Lichtes jedoch in die Verbundglas-Scheibe ein und wird nun z.B. an der inneren Grenzschicht der vom Betrachter aus gesehen weiter außen liegenden Glasfläche und der Zwischenschicht reflektiert und tritt versetzt anschließend aus der Verbundglas-Scheibe aus.

Hierbei tritt ein unerwünschter und störender Effekt, der Effekt der Geisterbilder, in Bezug auf das darzustellende Bild auf.

Dies führt dazu, dass der jeweilige Betrachter irritiert wird oder im schlimmsten Fall eine Fehlinformation erhält.

Bislang wird versucht dieses Problem dadurch zu lösen, dass die Oberflächen der Glasflächen nicht mehr parallel, sondern unter einem festen Winkel angeordnet werden. Dies wird z.B. dadurch erreicht, dass die Zwischenschicht eine linear ansteigende und/oder abnehmende Dicke aufweist. Im Fahrzeugbau wird typischerweise die Dicke so variiert, dass am unteren Ende der Scheibe hin zum Motorraum die kleinste Dicke vorgesehen ist, während die Dicke hin zum Dach linear ansteigt. D.h. die Zwischenschicht weist eine Keilform auf.

Allerdings wird diese Keilform nur in einem relativ kleinen Teil der Verbundglasscheibe zur Kompensation von eventuellen Geisterbildern, typischerweise in den Head-Up-Displaybereichen für einen Fahrer im Links- oder Rechtsverkehr und/oder für Head-Up-Displaybereich eines Beifahrers benötigt.

Solche keilförmigen Zwischenschichten sind zum einen vergleichsweise teuer in der Herstellung zum anderen ist auch die Lagerung und der Transport z.B. als aufgerollte Folie nicht frei von Problemen.

Ausgehend von dieser Situation ist es eine der Aufgaben der Erfindung ein verbessertes Herstellungsverfahren bereitzustellen, das geeignet ist Transportprobleme zu lösen und einen Beitrag zu einer besseren, weil kostengünstigeren Verfügbarkeit zu leisten.

### Kurzdarstellung der Erfindung

Die Aufgabe wird gelöst durch ein Verfahren zur Herstellung einer thermoplastischen Kombinationsfolie für eine Verbundglas-Scheibe, wobei die Kombinationsfolie einen Bereich mit variierender Dicke aufweist, der von Bereichen mit im Wesentlichen konstanter Dicke umgeben ist, wobei der Bereich mit variierender Dicke im Wesentlichen einem Head-Up-Displaybereich der Verbundglas-Scheibe zugeordnet ist und zur Vermeidung von Geisterbildern ausgelegt ist. Zunächst wird eine erste thermoplastische Folie mit im Wesentlichen konstanter erster Dicke erhalten, weiterhin wird eine zweite thermoplastische Folie mit zumindest einem Abschnitt veränderlicher Dicke erhalten, wobei der Abschnitt veränderlicher Dicke im Wesentlichen für den Head-Up-Displaybereich zur Verfügung steht. Anschließend werden die erste thermoplastische Folie und die zweite thermoplastische Folie zu einer thermoplastischen Kombinationsfolie aneinandergefügt, sodass an die erste thermoplastische Folie zumindest ein Abschnitt der zweiten thermoplastischen Folie grenzt.

Hierdurch kann auf eine kostengünstige Weise eine Kombinationsfolie hergestellt werden, die nur in einem Teil der Folie ein Keilprofil aufweist. Hierdurch können vorteilhaft sowohl die Kosten der Herstellung als auch vielfältige Probleme des Transports vermieden werden.

Gegenüber einer thermoplastischen Folie mit einem Keilwinkel, welcher auf die Anforderungen des Headup-Display-Bereichs optimiert ist, weist die erfindungsgemäße Kombinationsfolie zwei weitere entscheidende Vorteile auf: Erstens kann das Auftreten von Doppelbildern in Transmission außerhalb des Headup-Display -Bereichs vermindert werden. Dieser störende Effekt wird durch eine thermoplastische Folie mit einem Keilwinkel, welcher auf die Anforderungen des Headup-Display-Bereichs optimiert ist, typischerweise verstärkt, was durch die vorliegende Erfindung vermieden werden kann. Zweitens kann der Unterschied der Dicke der Verbundglas-Scheibe zwischen der Motorkante und der Dachkante verringert werden, wenn der Keilwinkel nur in einem Bereich der Scheibe vorhanden ist.

In einer erfindungsgemäßen Ausführung weist die zweite thermoplastische Folie weiterhin Abschnitte der ersten Dicke auf, die den zumindest einen Abschnitt variabler Dicke begrenzen. Der Schritt des Aneinanderfügens weist weiterhin die Schritte des Anlegens eines ersten Abschnitts der ersten thermoplastischen Folie an die zweite thermoplastische Folie und des Anlegens eines zweiten Abschnitts der ersten thermoplastischen Folie an die zweite thermoplastische Folie auf. Beim Anlegen des ersten Abschnitts bildet sich eine erste Anlege-Kante aus. Beim Anlegen des zweiten Abschnitts bildet sich eine zweite Anlege-Kante aus. Dabei ist die erste Anlege-Kante im Wesentlichen parallel zur zweiten Anlege-Kante.

Gemäß einer alternativen erfindungsgemäßen Ausführung weist der Schritt des Aneinanderfügens weiterhin auf die Schritte des Ausnehmens eines Abschnitts der ersten thermoplastischen Folie und des Einfügens der zweiten thermoplastischen Folie in den aus der ersten thermoplastischen Folie ausgenommenen Abschnitt auf.

In einer Weiterbildung der unterschiedlichen Ausführungsformen der Erfindung weist der Schritt des Aneinanderfügens den Schritt des Klebens und/oder Laserschweißens und/oder Kaltschweißens und/oder Ultraschallbondens der ersten thermoplastischen Folie und der zweiten thermoplastischen Folie auf, um die Kombinationsfolie zu erhalten.

In einer Weiterbildung der Erfindung enthalten die thermoplastischen Folien zumindest einen Stoff ausgewählt aus der Gruppe aufweisend Polyvinylbutyral (PVB), Ethylenvinylacetat (EVA), Polyurethan (PUR), und/oder Gemische und Copolymere davon.

In noch einer weiteren Form der Erfindung weist die thermoplastische Folie am unteren Rand eine Dicke von weniger als 1 mm, insbesondere weniger als 0.9 mm, und bevorzugt eine Dicke von mehr als 0.3 mm, beispielsweise etwa 0,38 mm, insbesondere mehr als 0.6 mm, auf.

In einer Ausgestaltung der Erfindung weist die erste und/oder zweite thermoplastische Folie eine geräuschmindernde Wirkung auf. Dadurch kann die Transmission von Geräuschen durch eine mit der Folie versehenen Verbundscheibe vorteilhaft verringert werden, wodurch eine Störung durch Umgebungsgeräusche und Fahrgeräusche vermindert werden kann. Eine solche Wirkung kann durch eine mehrlagige, beispielsweise dreilagige thermoplastische Folie erreicht werden, wobei die innere Lage eine höhere Plastizität oder Elastizität aufweist als die sie umgebenden äußeren Lagen, beispielsweise infolge eines höheren Anteils an Weichmachern.
In einer Ausgestaltung der Erfindung kann die thermoplastische Folie mindestens einen getönten Bereich aufweisen. Ein solcher getönter Bereich an der oberen Kante der Scheibe ist dem Fachmann beispielsweise als "shaded band" bekannt - hierdurch kann eine Störung des Fahrers durch blendende Sonnenstrahlung vermindert werden.
Die thermoplastische Zwischenschicht kann in einer Ausgestaltung der Erfindung eine Sonnen- oder Wärmeschutzfunktion aufweisen. Beispielweise kann die thermoplastische Zwischenschicht eine reflektierende Beschichtung im Infrarot-Bereich oder IR-absorbierende Zusätze enthalten. Die Beschichtung oder Zusätze können auf beziehungsweise in der erfindungsgemäßen thermoplastischen Folie mit Keilwinkel angeordnet sein. Alternativ kann eine weitere thermoplastische Folie, beispielweise eine beschichtete PET-Folie, in die thermoplastische Zwischenschicht eingebracht werden.
In einer Ausgestaltung der erfindungsgemäßen Verbundscheibe kann die erste oder die zweite Glasscheibe eine funktionelle Beschichtung aufweisen, bevorzugt auf ihrer zur thermoplastischen Folie hingewandten Oberfläche. Solche funktionellen Beschichtungen sind dem Fachmann geläufig, beispielsweise elektrisch leitfähige Beschichtungen, heizbare Beschichtungen, IR-reflektierende Beschichtungen, Beschichtungen niedriger Emissivität, Antireflexbeschichtung, farbgebende Beschichtungen.
In einer Ausgestaltung weist die erfindungsgemäße Verbundscheibe eine Heizfunktion auf. Die Heizfunktion kann die gesamte Scheibenfläche oder auch nur Teile davon betreffen. Solche Heizfunktionen können beispielsweise durch in die thermoplastische Zwischenschicht eingelagerte Drähte oder durch eine elektrisch leitfähige Beschichtung auf einer der Glasscheiben oder einer Folie der Zwischenschicht realisiert sein.

Weiterhin schlägt die Erfindung sowohl Verfahren zur Herstellung einer Verbundglas-Scheibe mit einer erfindungsgemäßen thermoplastischen Folie als auch die Verwendung der erfindungsgemäßen thermoplastischen Kombinationsfolie für Verbundglas-Scheiben in Fahrzeugen oder Gebäuden oder als Informationsdisplay vor.

### Kurzdarstellung der Zeichnungen

Ausführungsformen der vorliegenden Erfindung werden in exemplarischer Weise mit Bezug auf die angehängten Zeichnungen beschrieben, in denen zeigt:
Fig. 1 den prinzipiellen Zusammenhang der Entstehung von Geisterbildern in Reflektion,
Fig. 2 einen exemplarischen Aufbau einer Verbundglas-Scheibe mit einer keilförmigen Zwischenlage,
Fig. 3 eine exemplarische Anordnung, welche den Zusammenhang verschiedener Augenpositionen in Bezug auf ein Head-Up-Display aufzeigt,
Fig. 4 eine exemplarische Darstellung einer thermoplastischen Kombinationsfolie erhalten durch ein erfindungsgemäßes Verfahren,
Fig. 5 eine schematische Darstellung eines beispielhaften Dickenprofils einer thermoplastischen Folie entlang des Schnittes Y gemäß Figur 4,
Fig. 6 eine schematische Darstellung von Herstellungsvarianten einer erfindungsgemäßen thermoplastischen Kombinationsfolie,
Fig. 7 eine schematische Darstellung einer weiteren Herstellungsvariante einer erfindungsgemäßen thermoplastischen Kombinationsfolie, und
Fig. 8 noch eine weitere schematische Darstellung einer weiteren Herstellungsvariante einer erfindungsgemäßen thermoplastischen Kombinationsfolie.

### Ausführliche Darstellung der Erfindung in Bezug auf die Zeichnungen

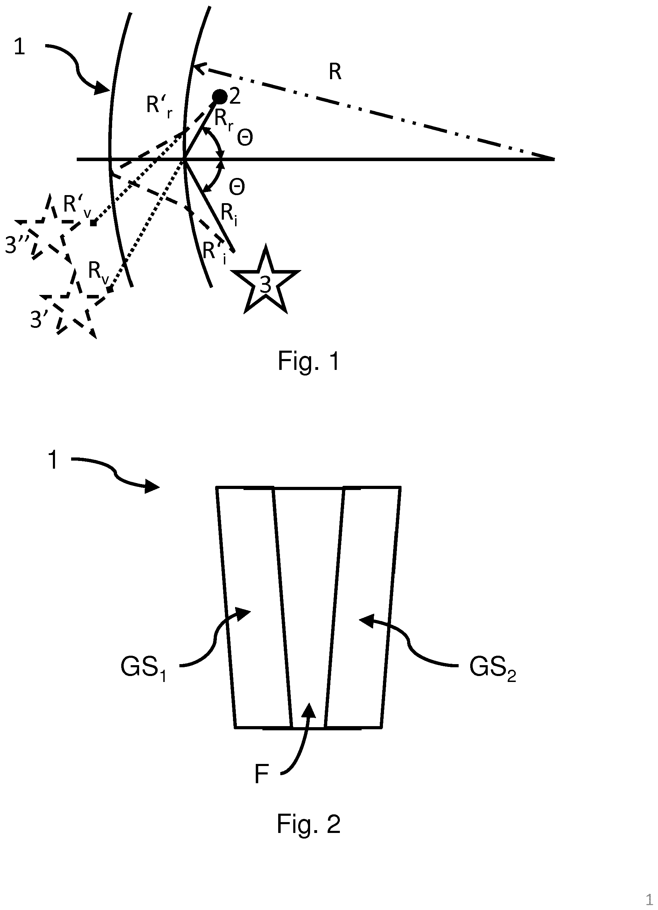

In Figur 1 ist der prinzipielle Zusammenhang der Entstehung von Geisterbildern in Reflektion an Hand eines Strahlenbildes dargestellt. Dabei wird eine gebogene Glas-Scheibe 1 angenommen. Die gebogene Glas-Scheibe 1 weist am Ort des Eintritts eines Strahles in die gebogene Glas-Scheibe 1 einen Krümmungsradius R auf. Von einer Lichtquelle 3, welche repräsentativ für ein Head-Up-Display HUD steht, wird nun Licht ausgestrahlt. Dieses Licht trifft entlang des Strahls Rᵢ von innen unter einem Winkel Θ auf die Glas-Scheibe 1 und wird dort unter demselben Winkel Θ wieder reflektiert. Der reflektierte Strahl Rᵣ trifft in das Auge 2 eines Betrachters. Dieser Strahlengang ist als durchgezogene Linie dargestellt. Aus der Sicht des Betrachters scheint die Lichtquelle 3 virtuell am Ort 3, d.h. vor der Glas-Scheibe 1, befindlich zu sein. Dies ist als Strahl Rᵥ dargestellt. Neben diesem ersten Stahl trifft ein weiterer Strahl in das Auge 2 des Betrachters. Dieser Strahl R'ᵢ stammt ebenfalls von der Lichtquelle 3. Allerdings dringt dieser Strahl R'ᵢ gemäß den bekannten Brechungsgesetzen in die Glas-Scheibe 1 an der inneren Grenzfläche Luft/Glas ein und wird an der äußeren Grenzfläche Glas/Luft reflektiert, bevor der Strahl nun durch die innere Grenzfläche tritt und als Strahl R'ᵣ in das Auge 2 des Betrachters trifft. Die innere Grenzfläche bezeichnet somit die Grenzfläche, die näher zum Betrachter befindlich ist, während äußere Grenzfläche die Grenzfläche bezeichnet, die weiter entfernt vom Betrachter ist. Dieser Strahlengang ist als gestrichelte Linie dargestellt. Aus der Sicht des Betrachters scheint die Lichtquelle 3 virtuell auch am Ort 3", d.h. ebenfalls vor der Glas-Scheibe 1, befindlich zu sein. Dies ist als Strahl R'ᵥ dargestellt.

Um diesem Problem zu begegnen, kann nun der Keilwinkel so geändert werden, dass der an der äußeren Grenzfläche reflektierte Strahl R'ᵣ als auch der an der inneren Grenzfläche reflektierte Strahl Rᵣ in Bezug auf das Auge 2 des Betrachters sich überlagern, d.h. der an der äußeren Grenzfläche reflektierte Strahl tritt an der Stelle der Reflektion des an der inneren Grenzfläche auftreffenden Strahls aus.

In aller Regel wird dieser Keilwinkel dadurch realisiert, dass bei Verbundglas-Scheiben 1 eine keilförmige Zwischenschicht F zwischen eine erste Glas-Schicht GS₁ und eine zweite Glas-Schicht GS₂ eingelegt wird, siehe Figur 2. Dabei kann in aller Regel vereinfachend davon ausgegangen werden, dass der Brechungsindex n konstant ist, da der Unterschied des Brechungsindex der Zwischenschicht F und den Glas-Schichten GS₁, GS₂ eher gering ist, sodass durch den geringen Unterschied kaum eine Wirkung ausgeht.

Wird dies nur für eine einzige Augenposition durchgeführt, wie nach dem Stand der Technik üblich, so kann der hieraus ermittelte Keilwinkel jedoch zu nicht optimalen Ergebnissen führen. Dies ist unter anderem dadurch zu erklären, dass sowohl die Körpergrößen von Fahrern, für die die Head-Up-Displays primär bestimmt sind, als auch die Sitzposition sehr unterschiedlich sind, sodass es eine Vielzahl möglicher Augposition gibt.

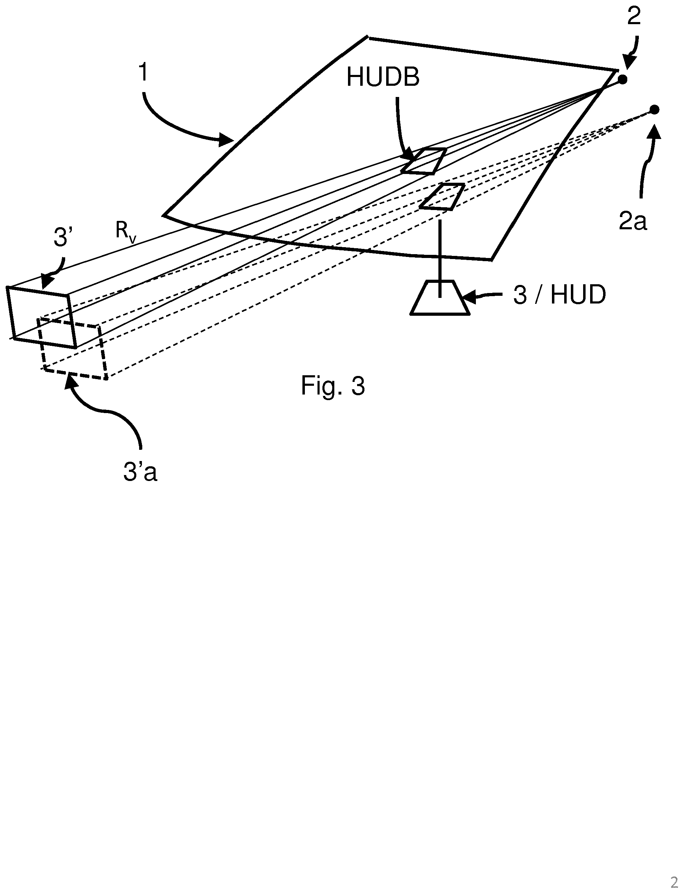

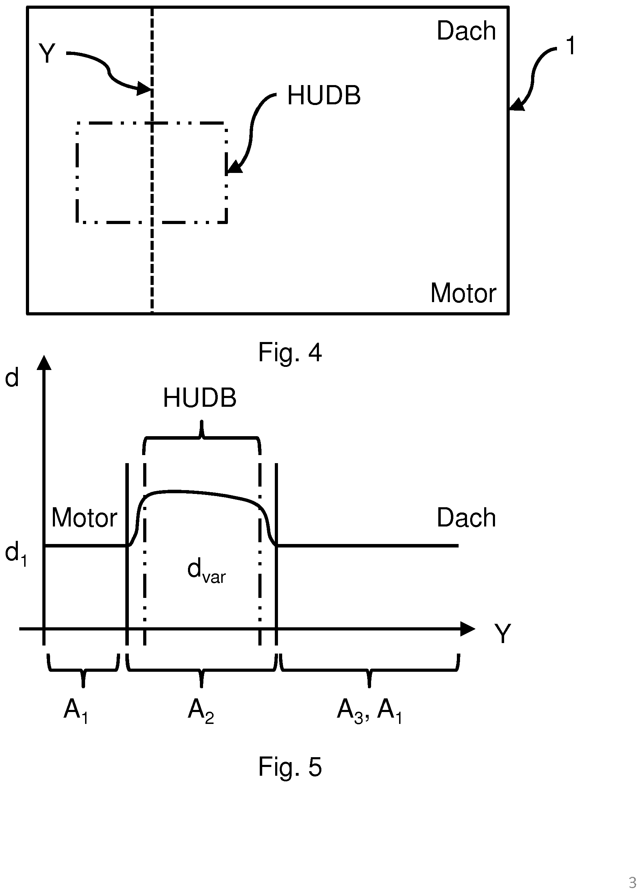

In Figur 3 ist eine typische Head-Up-Displayanordnung gezeigt. Dort sind auf der rechten Seite der Abbildung 3 zwei mögliche Positionen 2 und 2a des Auges 2 dargestellt. In Abhängigkeit von der Augposition 2 oder 2a ergibt sich die Position des Bildes 3' oder 3'a. Auch der an den optischen Prozessen zur Bilderzeugung beteiligte Bereich der Scheibe im Head-Up-Displaybereiches HUDB ("aktiver Bereich") ist von der Augposition 2, 2a abhängig. Modelhaft können das Projektorbild 3 und das virtuelle Bild 3', 3'a als vollflächige Rechtecke aufgefasst werden. Die Verbindungslinien von der Augposition 2, 2a zu den Ecken der Rechtecke sind in der Figur eingezeichnet. Die Schnittpunkte dieser Verbindungslinien mit der Scheibe ergeben die Ecken eines Trapezes, welches modelhaft den "aktiven Bereich" der Scheibe beschreiben sollen. Diese Trapeze sind innerhalb des Head-Up-Displaybereiches HUDB auf der Glas-Scheibe 1 in der Figur exemplarisch dargestellt. Eine Verbundglas-Scheibe 1 mit einer erfindungsgemäßen thermoplastische Kombinationsfolie F, die Geisterbilder im Head-Up-Displaybereich HUDB minimiert, ist beispielhaft in Figur 4 dargestellt. Entlang des Schnittes Y weist die thermoplastischen Kombinationsfolie F ein sich änderndes Dickenprofil auf, sodass sich im Bereich des Head-Up-Displaybereiches HUDB ein gewünschter Keilwinkel zur Kompensation von Geisterbildern einstellt. Ein entsprechendes beispielhaftes Dickenprofil d ist in Figur 5 als eine Funktion über den Abstand zum unteren Ende der Verbundglasscheibe 1 dargestellt. Dabei ist gleichzeitig die Korrespondenz zum Head-Up-Displaybereich HUDB als auch zu etwaigen Abschnitten von unterschiedlichen thermoplastischen Folien gemäß unterschiedlicher Herstellungsverfahren aufgeführt.

In einer sehr allgemeinen Variante des Herstellungsverfahrens einer thermoplastischen Kombinationsfolie F für eine Verbundglas-Scheibe 1 weist die Kombinationsfolie F einen Bereich A₂ mit variierender Dicke dᵥₐᵣ auf. Dabei ist die in Figur 5 dargestellt Kurve nur als Beispiel zu verstehen. Ohne weiteres kann z.B. die Dickenänderung auch abschnittsweise linear oder jegliche andere Form aufweisen, so lange hierdurch ein gewisser Keilwinkel der Verbundglass-Scheibe 1 im Head-Up-Displaybereich HUDB bedingt wird. Mittels des Keilwinkels kann für eine oder für mehrere Augenpositionen eine Minimierung von Geisterbildern in Bezug auf das Head-Up-Display HUD bereitgestellt werden, wobei der Keilwinkel anhand entsprechender Formeln bestimmt werden kann, die dem Fachmann an sich bekannt sind.

Wie in Figur 5 angezeigt, kann z.B. der Bereich A₂ so gestaltet sein, dass der Head-Up-Displaybereich HUDB lediglich einen Teil des Bereiches A₂ mit variierender Dicke dᵥₐᵣ einnimmt. Der Bereich A₂ mit variierender Dicke dᵥₐᵣ ist weiterhin umgeben von einem oder mehreren Bereichen A₁, A₃ mit im Wesentlichen konstanter Dicke (d₁).

Zunächst wird für das Herstellungsverfahren eine erste thermoplastische Folie, die später zumindest den einen Bereich A₁ oder die mehreren Bereich A₁, A₃ mit im Wesentlichen konstanter erster Dicke d₁ bilden, und eine zweite thermoplastische Folie, die später zumindest den Abschnitt A₂ mit veränderlicher Dicke dᵥₐᵣ aufweist, für die weiteren Verfahrensschritte erhalten. Dabei steht nach Abschluss des Herstellungserfahrens der Abschnitt veränderlicher Dicke im Wesentlichen für den Head-Up-Displaybereich HUDB zur Verfügung. Anschließend werden die erste thermoplastische Folie und die zweite thermoplastische Folie A₂ zu einer thermoplastischen Kombinationsfolie aneinandergefügt, sodass an die erste thermoplastische Folie, welche nun den Bereich A₁ oder die Bereiche A₁ und A₃ bildet, zumindest ein Bereich A₂ der zweiten thermoplastischen Folie, die nun den Abschnitt veränderlicher Dicke dᵥₐᵣ aufweist, angrenzt.

Dabei kann der Schritt des Aneinanderfügens den Schritt des Klebens und/oder Laserschweißens und/oder Kaltschweißens und/oder Ultraschallbondens der ersten thermoplastischen Folie und der zweiten thermoplastischen Folie aufweisen, um die thermoplastische Kombinationsfolie F zu erhalten. Dabei kann die Auswahl je nach verwendeten Materialien für die erste thermoplastische Folie bzw. die zweite thermoplastische Folie unterschiedlich ausgestaltet sein.

Eine derartige thermoplastische Kombinationsfolie F - und damit auch jede der thermoplastischen Folien aus denen die thermoplastische Kombinationsfolie F aufgebaut ist - kann zumindest einen Stoff ausgewählt aus der Gruppe aufweisend Polyvinylbutyral (PVB), Ethylenvinylacetat (EVA), Polyurethan (PUR), und/oder Gemische und Copolymere davon enthalten.

Dabei kann die Auswahl eines geeigneten Materials für die thermoplastische Folie F z.B. von den Eigenschaften der Folie in Bezug auf den Brechungsindex als auch die erzielbare Festigkeit in Bezug auf eine gewisse Foliendicke abhängig sein. Prinzipiell ist die Erfindung nicht auf ein bestimmtes Material für eine thermoplastische Folie F eingeschränkt.

Insbesondere kann auch vorgesehen sein, dass die erste thermoplastische Folie und die zweite thermoplastische Folie im Wesentlichen die gleichen Materialen aufweisen, um so eine gute Verbindbarkeit als auch beste optische Eigenschaften zur Verfügung zu stellen. Es kann jedoch auch vorgesehen sein, dass zum Erreichen bestimmter Keilwinkelprofile die zweite thermoplastische Folie aus einem anderen Material gefertigt ist als die erste thermoplastische Folie.

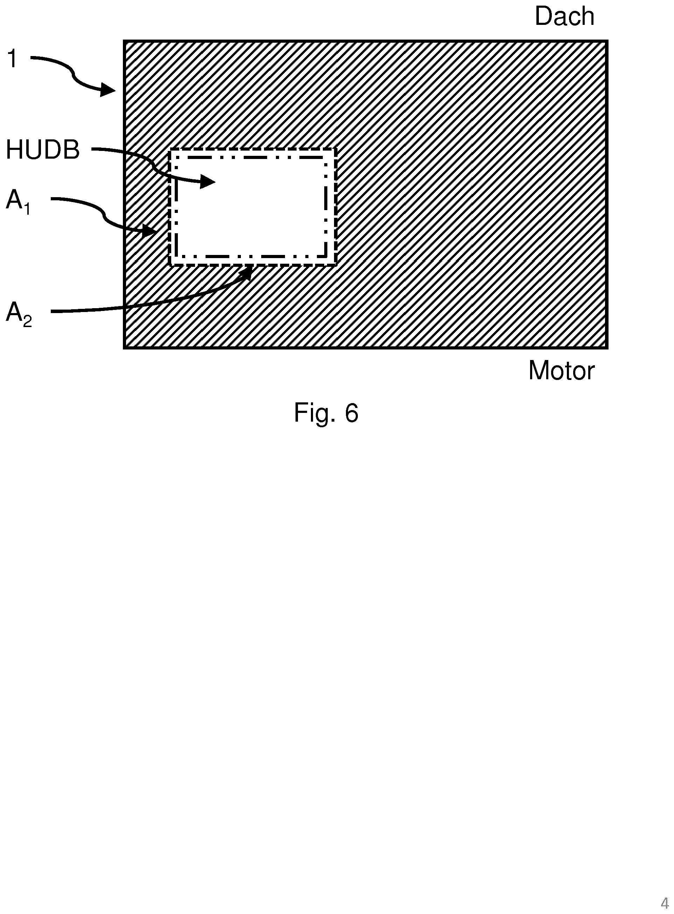

In einer Ausführungsform des Schrittes des Aneinanderfügens, der in Bezug auf Figur 6 nachfolgend erläutert werden wird, wird aus einem Abschnitt A₁ der ersten thermoplastischen Folie - dargestellt mit Schraffur - ein Abschnitt entsprechend der Größe des zweiten Abschnitts A₂ ausgenommen. Anschließend wird an die frei gewordene Stelle die zweite thermoplastische Folie, die den Abschnitt veränderlicher Dicke dᵥₐᵣ aufweist, eingesetzt und anschließend werden der erste Abschnitt und der zweite Abschnitt miteinander verbunden.

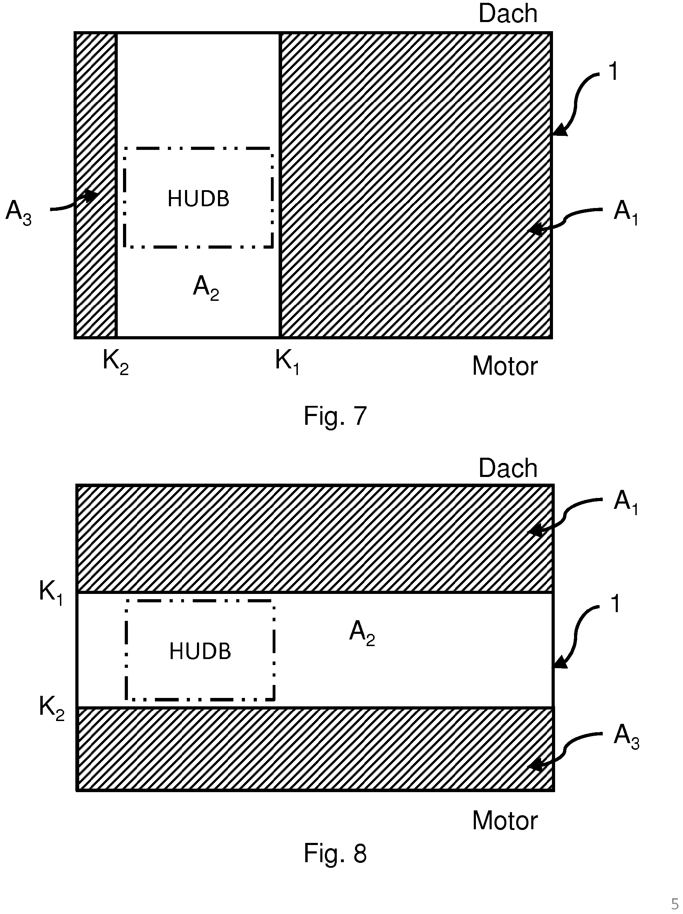

In einer alternativen Ausführungsform des Herstellungsverfahrens, das unter Bezug auf die Figuren 7 und 8 erläutert werden wird, ist vorgesehen, dass die zweite thermoplastische Folie weiterhin Abschnitte der ersten Dicke d₁ aufweist, die den zumindest einen Abschnitt A₂ variabler Dicke dᵥₐᵣ begrenzen. In Figur 7 und Figur 8 ist wiederum die erste thermoplastische Folie mittels Schraffur gekennzeichnet. Dabei werden nun zwei Abschnitte A₁ und A₃ gebildet.

In der Ausführungsform der Figur 7 sind diese Abschnitte A₁ und A₃ im Wesentlichen so angeordnet, dass sie an den Bereich A₂ der zweiten thermoplastischen Folie vertikal an den Anlege-Kanten K₁ und K₂ aneinandergrenzen. Dabei sind die Anlege-Kanten K₁ und K₂ im Wesentlichen parallel zueinander ausgeführt. Ohne weiteres und - wie am Anfang beschrieben - kann es auch sinnvoll sein, z.B. den Bereich A₃ und A₂ in Figur 7 als einheitlichen Bereich auszugestalten und nur diese entlang der Anlege-Kante K₁ aneinanderzufügen. Dies kann insbesondere dann von Vorteil sein, wenn der Abschnitt A₃ eher klein ausfällt und so ein Verfahrensschritt und/oder eine mögliche Fehlerquelle eingespart werden kann.

Im Unterschied zu der Ausführungsform der Figur 7 sind in der Ausführungsform der Figur 8 diese Abschnitte A₁ und A₃ im Wesentlichen so angeordnet, dass sie an den Bereich A₂ der zweiten thermoplastischen Folie horizontal an den Anlege-Kanten K₁ und K₂ aneinandergrenzen. Dabei sind die Anlege-Kanten K₁ und K₂ im Wesentlichen parallel zueinander ausgeführt. Ohne weiteres und - wie am Anfang beschrieben - kann es auch sinnvoll sein, z.B. den Bereich A₃ und A₂ in Figur 8 als einheitlichen Bereich auszugestalten und nur diese entlang der Anlege-Kante K₁ aneinanderzufügen. Dies kann insbesondere dann von Vorteil sein, wenn der Abschnitt A₃ eher klein ausfällt und so ein Verfahrensschritt und/oder eine mögliche Fehlerquelle eingespart werden kann.

In der Ausführungsform der Figur 8 ist es prinzipiell auch möglich, dass die Abschnitte A₁ und A₃ unterschiedliche Dicken aufweisen, so dass z.B. auch ein gewisses Keilwinkelprofil zur Verfügung gestellt werden kann, dass eine Verbesserung von Doppelbildern in Transmission zur Verfügung stellt.

Ohne weiteres können natürlich auch Mischformen der Ausführungsformen der Figur 7 und Figur 8 oder auch der Ausführungsformen in Bezug auf die Figur 6 vorgesehen sein, um bestimmte Keilwinkelprofile zu ermöglichen.

Für die Fertigung ist es besonders vorteilhaft, dass die erfindungsgemäße thermoplastische Kombinationsfolie F am unteren Rand eine Dicke von weniger als 1 mm, bevorzugt weniger als 0.9 mm, und bevorzugt eine Dicke von mehr als 0.3 mm, insbesondere mehr als 0.6 mm, aufweist. Hierdurch kann die Folie in bewährter Weise bei der Herstellung von Verbundglas-Scheiben 1 verwendet werden, ohne dass es kostentreibender spezieller Vorrichtungen bedürfte.

Somit kann ein Aufbau einer Verbundglas-Scheibe 1 wie in Figur 2 gezeigt auch mit der erfindungsgemäßen thermoplastischen Folie F zwischen einer ersten Glasschicht GS₁ und einer zweite Glasschicht GS₂ erzielt werden.

Solche Verbundglas-Scheiben 1 weisen eine Dicke von 1 mm bis 8 mm, bevorzugt 3.5 bis 5.3 mm, auf und können somit ohne weiteres wie herkömmliche Verbundglas-Scheiben weiter verarbeitet werden.

Dabei weisen die erste Glasschicht GS₁ und/oder die zweite Glasschicht GS₂ der Verbundglas-Scheibe 1 typischerweise eine Dicke ausgewählt aus einem Bereich von etwa 1 mm bis 3 mm, insbesondere 1.4 mm bis 2.6 mm auf. Hierdurch werden die geforderten Eigenschaften an einen Splitterschutz und/oder einen Schallschutz gewährleistet.

Mit der thermoplastischen Kombinationsfolie F kann somit in bewährter Weise eine Verbundglas-Scheibe 1 hergestellt werden, in dem eine erste Glas-Schicht GS₁ und eine zweite Glas-Schicht GS₂ erhalten werden, wobei die thermoplastische Folie F auf die erste Glasschicht GS₁ aufgelegt wird, und bei Verwendung eines Autoklav-Prozesses auf die thermoplastische Folie die zweite Glasschicht GS₂ aufgelegt wird. Anschließend werden die thermoplastische Kombinationsfolie F mit der ersten Glas-Schicht GS₁ und der zweiten Glas-Schicht GS₂ im Autoklaven und unter Wärme- und Druckeinwirkung verbunden.

Natürlich ist die erfindungsgemäße thermoplastische Kombinationsfolie F nicht nur in einem Autoklav-Prozess verwendbar, sondern kann z.B. auch mit einem Vakuum-Thermo-Offen-Prozess oder dergleichen autoklavenfreien Prozessen verwendet werden.

Auch ist es prinzipiell möglich zunächst nur eine erste Glas-Schicht GS₁ mit der thermoplastischen Kombinationsfolie F nach Auflage zu verbinden und anschließend erst die zweite Glas-Schicht GS₂ aufzulegen und mit der auf die Glas-Schicht GS₁ vorverbundenen thermoplastischen Kombinationsfolie F zu verbinden.

Derartig hergestellte thermoplastische Folien F können in Verbundglas-Scheiben 1 in Fahrzeugen, insbesondere als Windschutzscheibe zur Anzeige eines Head-Up-Displays, oder Gebäuden oder als Informationsdisplay verwendet werden.

Eine Verwendung in einer Head-Up-Display-Anordnung ist beispielsweise in Figur 3 zu erkennen. Dort beleuchtet ein Projektor als Lichtquelle einen beispielhaften Head-Up-Displaybereiches HUDB einer Verbundglas-Scheibe 1, welche mit einer erfindungsgemäßen thermoplastischen Kombinationsfolie F ausgestattet ist. Dabei werden im Head-Up-Displaybereich Geisterbilder des Projektors minimiert.

Im Ergebnis zeigt sich, dass die vorgestellten erfindungsgemäßen thermoplastischen Kombinationsfolien eine Verbesserung in auf die kostengünstige Verfügbarkeit von Verbundglasscheiben zur Verfügung stellen, die eine Minimierung von Geisterbildern im Head-Up Displaybereich HUDB ermöglichen.

## Patentansprüche

1. Verfahren zur Herstellung einer thermoplastischen Kombinationsfolie (F) für eine Verbundglas-Scheibe (1), wobei die Kombinationsfolie (F) einen Bereich (A₂) mit variierender Dicke (dᵥₐᵣ) aufweist, der von Bereichen (A₁, A₃) mit im Wesentlichen konstanter Dicke (d₁) umgeben ist, wobei der Bereich (A₂) mit variierender Dicke im Wesentlichen einem Head-Up-Displaybereich (HUDB) der Verbundglas-Scheibe (1) zugeordnet ist und zur Vermeidung von Geisterbildern ausgelegt ist, aufweisend:
• Erhalten einer ersten thermoplastischen Folie mit im Wesentlichen konstanter erster Dicke (d₁),
• Erhalten einer zweiten thermoplastischen Folie mit zumindest einem Abschnitt (A₂) veränderlicher Dicke (dᵥₐᵣ), wobei der Abschnitt (A₂) veränderlicher Dicke im Wesentlichen für den Head-Up-Displaybereich (HUDB) zur Verfügung steht,
• Aneinanderfügen der ersten thermoplastischen Folie und der zweiten thermoplastischen Folie zu einer thermoplastischen Kombinationsfolie (F), sodass an die erste thermoplastische Folie zumindest ein Abschnitt der zweiten thermoplastischen Folie grenzt,
**dadurch gekennzeichnet, dass** die zweite thermoplastische Folie weiterhin Abschnitte der ersten Dicke (d₁) aufweist, die den zumindest einen Abschnitt (A₂) variabler Dicke (dᵥₐᵣ) begrenzen, wobei der Schritt des Aneinanderfügens weiterhin aufweist:
• Anlegen eines ersten Abschnitts (A₁) der ersten thermoplastischen Folie an die zweite thermoplastische Folie, wobei sich eine erste Anlege-Kante (K₁) ausbildet,
• Anlegen eines zweiten Abschnitts (A₃) der ersten thermoplastischen Folie an die zweite thermoplastische Folie, wobei sich eine zweite Anlege-Kante (K₂) ausbildet,
• wobei die erste Anlege-Kante (K₁) im Wesentlichen parallel zur zweiten Anlege-Kante (K₂) ist.

2. Verfahren zur Herstellung einer thermoplastischen Kombinationsfolie (F) für eine Verbundglas-Scheibe (1), wobei die Kombinationsfolie (F) einen Bereich (A₂) mit variierender Dicke (dᵥₐᵣ) aufweist, der von Bereichen (A₁, A₃) mit im Wesentlichen konstanter Dicke (d₁) umgeben ist, wobei der Bereich (A₂) mit variierender Dicke im Wesentlichen einem Head-Up-Displaybereich (HUDB) der Verbundglas-Scheibe (1) zugeordnet ist und zur Vermeidung von Geisterbildern ausgelegt ist, aufweisend:
• Erhalten einer ersten thermoplastischen Folie mit im Wesentlichen konstanter erster Dicke (d₁),
• Erhalten einer zweiten thermoplastischen Folie mit zumindest einem Abschnitt (A₂) veränderlicher Dicke (dᵥₐᵣ), wobei der Abschnitt veränderlicher Dicke im Wesentlichen für den Head-Up-Displaybereich (HUDB) zur Verfügung steht,
• Aneinanderfügen der ersten thermoplastischen Folie und der zweiten thermoplastischen Folie zu einer thermoplastischen Kombinationsfolie (F), sodass an die erste thermoplastische Folie zumindest ein Abschnitt der zweiten thermoplastischen Folie grenzt,
wobei der Schritt des Aneinanderfügens weiterhin aufweist:
• Ausnehmen eines Abschnitts der ersten thermoplastischen Folie
• Einfügen der zweiten thermoplastischen Folie in den aus der ersten thermoplastischen Folie ausgenommenen Abschnitt.

3. Verfahren nach einem der vorhergehenden Ansprüche, **dadurch gekennzeichnet, dass** der Schritt des Aneinanderfügens den Schritt des Klebens und/oder Laserschweißens und/oder Kaltschweißens und/oder Ultraschallbondens der ersten thermoplastischen Folie und der zweiten thermoplastischen Folie aufweist, um die Kombinationsfolie (F) zu erhalten.

4. Thermoplastische Kombinationsfolie (F), erhalten nach einem Verfahren gemäß einem der vorhergehenden Ansprüche.

5. Thermoplastische Kombinationsfolie (F) nach Anspruch 4, **dadurch gekennzeichnet, dass** die erste und die zweite thermoplastische Folie unabhängig voneinander zumindest einen Stoff ausgewählt aus der Gruppe aufweisend Polyvinylbutyral (PVB), Ethylenvinylacetat (EVA), Polyurethan (PUR), und/oder Gemische und Copolymere davon enthalten.

6. Verfahren zur Herstellung einer Verbundglas-Scheibe (1), aufweisend die Schritte
• Erhalten einer ersten Glas-Schicht (GS₁),
• Erhalten einer zweiten Glas-Schicht (GS₂),
• Auflegen einer thermoplastischen Kombinationsfolie (F) nach einem der Ansprüche 4 bis 5 auf die erste Glas-Schicht (GS₁),
• Auflegen der zweiten Glas-Schicht (GS₂) auf die thermoplastische Kombinationsfolie (F),
• Verbinden der ersten Glas-Schicht (GS₁) mit der thermoplastischen Kombinationsfolie (F), und
• Verbinden der zweiten Glas-Schicht (GS₂) mit der thermoplastischen Kombinationsfolie (F).

7. Verwendung einer thermoplastischen Kombinationsfolie (F) nach einem der vorhergehenden Ansprüche 4 bis 5 für Verbundglas-Scheiben (1) in Fahrzeugen oder Gebäuden oder als Informationsdisplay.

## Claims

1. Method for producing a thermoplastic combination film (F) for a laminated glass pane (1), wherein the combination film (F) has a region (A₂) of varying thickness (dᵥₐᵣ), which is surrounded by regions (A₁, A₃) of substantially constant thickness (di), wherein the region (A₂) of varying thickness is substantially associated with a head-up display region (HUDB) of the laminated glass pane (1) and is designed for avoiding ghost images, comprising:
• Obtaining a first thermoplastic film of substantially constant first thickness (di),
• Obtaining a second thermoplastic film with at least one section (A₂) of variable thickness (dᵥₐᵣ), wherein the section (A₂) of variable thickness is substantially available for the head-up display region (HUDB),
• Joining the first thermoplastic film and the second thermoplastic film to form a thermoplastic combination film (F) such that at least one section of the second thermoplastic film is adjacent the first thermoplastic film, **characterised in that** the second thermoplastic film further has sections of the first thickness (di), which delimit at least one section (A₂) of variable thickness (dᵥₐᵣ), wherein the joining step further comprises:
• Placing a first section (A₁) of the first thermoplastic film on the second thermoplastic film, wherein a first contact edge (K₁) is formed,
• Placing a second section (A₃) of the first thermoplastic film on the second thermoplastic film, wherein a second contact edge (K₂) is formed,
• wherein the first contact edge (K₁) is substantially parallel to the second contact edge (K₂).

2. Method for producing a thermoplastic combination film (F) for a laminated glass pane (1), wherein the combination film (F) has a region (A₂) of varying thickness (dᵥₐᵣ) that is surrounded by regions (A₁, A₃) of substantially constant thickness (di), wherein the region (A₂) of varying thickness is substantially associated with a head-up display region (HUDB) of the laminated glass pane (1) and is designed for avoiding ghost images, comprising:
• Obtaining a first thermoplastic film of substantially constant first thickness (di),
• Obtaining a second thermoplastic film with at least one section (A₂) of variable thickness (dᵥₐᵣ), wherein the section of variable thickness is substantially available for the head-up display region (HUDB),
• Joining the first thermoplastic film and the second thermoplastic film to form a thermoplastic combination film (F) such that at least one section of the second thermoplastic film is adjacent the first thermoplastic film,
wherein the joining step further comprises:
• Removing a section of the first thermoplastic film
• Inserting the second thermoplastic film into the section removed from the first thermoplastic film.

3. Method according to one of the preceding claims, **characterised in that** the joining step comprises the step of gluing and/or laser welding and/or cold welding and/or ultrasonic bonding of the first thermoplastic film and the second thermoplastic film in order to obtain the combination film (F).

4. Thermoplastic combination film (F), obtained according to a method in accordance with one of the preceding claims.

5. Thermoplastic combination film (F) according to claim 4, **characterised in that** the first and the second thermoplastic film, independently of one another, contain at least one material selected from the group comprising polyvinyl butyral (PVB), ethylene vinyl acetate (EVA), polyurethane (PUR), and/or mixtures and copolymers thereof.

6. Method for producing a laminated glass pane (1), comprising the steps
• Obtaining a first-glass layer (GS₁),
• Obtaining a second glass layer (GS₂),
• Placing a thermoplastic combination film (F) according to one of claims 4 through 5 on the first glass layer (GS₁),
• Placing the second glass layer (GS₂) on the thermoplastic combination film (F),
• Bonding the first glass layer (GS₁) to the thermoplastic combination film (F), and
• Bonding the second glass layer (GS₂) to the thermoplastic combination film (F).

7. Use of a thermoplastic combination film (F) according to one of the preceding claims 4 through 5 for laminated glass panes (1) in vehicles or buildings or as an information display.

## Revendications

1. Procédé de fabrication d'une feuille combinée thermoplastique (F) pour une vitre en verre feuilleté (1), dans lequel la feuille combinée (F) présente une zone (A₂) ayant une épaisseur variable (dᵥₐᵣ), qui est entourée par des zones (A₁, A₃) ayant une épaisseur sensiblement constante (d₁), dans lequel la zone (A₂) ayant une épaisseur variable est associée sensiblement à une zone d'affichage tête haute (HUDB) de la vitre en verre feuilleté (1) et est configurée pour éviter des images fantômes, comportant :
• l'obtention d'une première feuille thermoplastique ayant une première épaisseur sensiblement constante (d₁) ;
• l'obtention d'une seconde feuille thermoplastique ayant au moins une section (A₂) d'épaisseur variable (dᵥₐᵣ), la section (A₂) d'épaisseur variable étant disponible essentiellement pour la zone d'affichage tête haute (HUDB) ;
• l'assemblage de la première feuille thermoplastique et de la seconde feuille thermoplastique en une feuille combinée thermoplastique (F), de telle sorte qu'au moins une section de la seconde feuille thermoplastique est adjacente à la première feuille thermoplastique,
**caractérisé par le fait que** la seconde feuille thermoplastique présente en outre des sections de la première épaisseur (d₁), qui délimitent ladite au moins une section (A₂) d'épaisseur variable (dᵥₐᵣ), l'étape d'assemblage comprenant en outre :
• l'application d'une première section (A₁) de la première feuille thermoplastique sur la seconde feuille thermoplastique, un premier bord d'application (K₁) se formant ;
• l'application d'une seconde section (A₃) de la première feuille thermoplastique sur la seconde feuille thermoplastique, un second bord d'application (K₂) se formant,
• le premier bord d'application (K₁) étant sensiblement parallèle au second bord d'application (K₂).

2. Procédé de fabrication d'une feuille combinée thermoplastique (F) pour une vitre en verre feuilleté (1), dans lequel la feuille combinée (F) présente une zone (A₂) ayant une épaisseur variable (dᵥₐᵣ), qui est entourée par des zones (A₁, A₃) ayant une épaisseur sensiblement constante (d₁), dans lequel la zone (A₂) ayant une épaisseur variable est associée sensiblement à une zone d'affichage tête haute (HUDB) de la vitre de verre feuilleté (1) et est configurée pour éviter des images fantômes, comportant :
• l'obtention d'une première feuille thermoplastique ayant une première épaisseur sensiblement constante (d₁) ;
• l'obtention d'une seconde feuille thermoplastique ayant au moins une section (A₂) d'épaisseur variable (dᵥₐᵣ), la section d'épaisseur variable étant disponible essentiellement pour la zone d'affichage tête haute (HUDB) ;
• l'assemblage de la première feuille thermoplastique et de la seconde feuille thermoplastique en une feuille combinée thermoplastique (F), de telle sorte qu'au moins une section de la seconde feuille thermoplastique est adjacente à la première feuille thermoplastique ;
dans lequel l'étape de l'assemblage présente en outre :
• le retrait d'une section de la première feuille thermoplastique
• l'insertion de la seconde feuille thermoplastique dans la section retirée à partir de la première feuille thermoplastique.

3. Procédé selon l'une des revendications précédentes, **caractérisé par le fait que** l'étape de l'assemblage présente l'étape de collage et/ou de soudage laser et/ou de soudage à froid et/ou de soudage par ultrasons de la première feuille thermoplastique et de la seconde feuille thermoplastique, pour obtenir la feuille combinée (F).

4. Feuille combinée thermoplastique (F), obtenue par un procédé selon l'une des revendications précédentes.

5. Feuille combinée thermoplastique (F) selon la revendication 4, **caractérisée par le fait que** le première et la seconde feuille thermoplastique contiennent indépendamment l'une de l'autre au moins une matière choisie dans le groupe comportant le butyral polyvinylique (PB), l'éthylène-acétate de vinyle (AVE), le polyuréthane (PUR) et/ou les mélanges et copolymères de ceux-ci.

6. Procédé de fabrication d'une vitre en verre feuilleté (1), comportant les étapes de
• obtention d'une première couche de verre (GS₁) ;
• obtention d'une seconde couche de verre (GS₂) ;
• application d'un feuille combinée thermoplastique (F) selon l'une des revendications 4 à 5 sur la première couche de verre (GS₁) ;
• application de la seconde couche de verre (GS₂) sur la feuille combinée thermoplastique (F) ;
• liaison de la première couche de verre (GS₁) avec la feuille combinée thermoplastique (F) ; et
• liaison de la seconde couche de verre (GS₂) avec la feuille combinée thermoplastique (F).

7. Utilisation d'une feuille combinée thermoplastique (F) selon l'une des revendications 4 à 5 précédentes pour des vitres en verre feuilleté (1) dans des véhicules ou des bâtiments ou en tant que dispositif d'affichage d'informations.
